# EUROPEAN PATENT APPLICATION

(11) **EP 4 424 159 A1**
(43) Date of publication of application: **04.09.2024**
(21) Application number: 22887088.7
(22) Date of filing: 26.10.2022
(51) Int. Cl.: A01N 1/02, F25D 3/10, A23L 17/00, A23B 4/06, F25C 1/00

(54) **ICE SLURRY, ICE SLURRY PRODUCTION SYSTEM, ICE SLURRY PRODUCTION DEVICE, AND ICE SLURRY PRODUCTION METHOD**

(30) Priority: 26.10.2021 JP 2021174973
(71) Applicant: Blanctec International Co., Ltd., Tokyo 102-0093 (JP)
(72) Inventor: HIROKANE, Yoshio, Tokyo 102-0093 (JP)
(74) Representative: Strehl Schübel-Hopf & Partner
(86) International application number: PCT/JP2022/040013
(87) International publication number: WO 2023/074763

(57) **Abstract**

An ice slurry production system with excellent refrigeration characteristics is provided. The ice slurry production system includes: an ice slurry storage tank 12 which stores saline solution that is isotonic or substantially isotonic with an object to be refrigerated; a disc part 14 and a sweeping part 16 which produce flake ice of the frozen saline solution and mix the flake ice into the saline solution; a liquid nitrogen tank 18 which supplies liquid nitrogen to the disc part 14; and a nano-mixer 20 which uses the liquid nitrogen having passed through the disc part 14 to incorporate at least nitrogen nanobubbles, from among nitrogen microbubbles and nitrogen nanobubbles, into the saline solution.

## Description

### Technical Field

The present invention relates to, for example, ice slurry, which can be used for transportation and storage of refrigerated products, an ice slurry production system, an ice slurry production device, and an ice slurry production method.

### Background Art

For example, fresh foods such as fish, shellfish, and meat are refrigerated as refrigerated products, and these refrigerated products are stored (preserved) or transported in general. Ice slurry is sometimes used for refrigeration of the refrigerated products. In this case, the freshness of the refrigerated products is maintained by immersing thereof in the ice slurry and lowering the temperature.

Patent Document 1 mentioned below discloses various technologies for effectively refrigerating and freezing fresh animals and plants, including fish and shellfish. Patent Document 1 also discloses devices for producing various types of ice and refrigerators using ice slurry. In addition, Patent documents 2 and 3 mentioned below disclose a stationary fluid stirring device that generates cavitation by complicated flow of fluid.

### Citation List

### Patent Literature

Patent Document 1: Japanese Patent Application Laid-Open Publication No. 2018-017490
Patent Document 2: Japanese Patent No. 3706872
Patent Document 3: Japanese Patent No. 3706873

### Summary of Invention

### Technical Problem

The technology for refrigerating fresh animals and plants, as disclosed in Patent Document 1, is expected to be able to refrigerate with higher freshness. For this reason, it is necessary to improve the refrigeration characteristics of ice slurry used for refrigeration as much as possible.

The challenge of the present invention is to provide ice slurry with excellent refrigeration characteristics, an ice slurry production system, an ice slurry production device, and an ice slurry production method.

### Solution to Problem

In order to solve the above problem, the present invention relates to ice slurry, an ice slurry production system, an ice slurry production device, and an ice slurry production method as follows.
(1) Ice slurry used for refrigerating an object (fish or an organ) to be refrigerated, including: a mixture of a saline solution containing at least nitrogen nanobubbles from among nitrogen microbubbles and nitrogen nanobubbles, and flake ice, which is the saline solution having frozen, the saline solution being isotonic or substantially isotonic with the object to be refrigerated, the ice slurry having dissolved oxygen of 1.0 mg/L or less.
(2) An ice slurry production system including: an ice slurry production tank storing a saline solution isotonic or substantially isotonic with an object to be refrigerated; an ice production unit (at least a disc part) producing flake ice, which is the saline solution having frozen, and mixing the flake ice into the saline solution; a liquid nitrogen supply source supplying the ice production unit with liquid nitrogen; and a nanobubble supply unit (nano-mixer and the like) causing the saline solution to contain at least nitrogen nanobubbles from among nitrogen microbubbles and nitrogen nanobubbles using the liquid nitrogen having passed through the ice production unit.
(3) An ice slurry production device including an ice production unit producing flake ice by freezing a saline solution, which is isotonic or substantially isotonic with an object to be refrigerated and contains at least nitrogen nanobubbles from among nitrogen microbubbles and nitrogen nanobubbles, and mixing the flake ice into the saline solution.
(4) An ice slurry production method including: a first step of supplying a saline solution with at least nitrogen nanobubbles from among nitrogen microbubbles and nitrogen nanobubbles, the saline solution being isotonic or substantially isotonic with an object to be refrigerated; and a second step of mixing flake ice, which is the saline solution having frozen, into the saline solution to produce ice slurry having dissolved oxygen of 1.0 mg/L or less.
(5) An ice slurry production method including: a first step of supplying an ice production unit with liquid nitrogen to cool the ice production unit; a second step of producing flake ice by freezing a saline solution isotonic or substantially isotonic with an object to be refrigerated, and mixing the flake ice into the saline solution, the second step being performed by the ice production unit; and a third step of supplying the saline solution with at least nitrogen nanobubbles from among nitrogen microbubbles and nitrogen nanobubbles using the liquid nitrogen having passed through the ice production unit.

### Advantageous Effects of Invention

According to the present invention, it is possible to provide ice slurry with excellent refrigeration characteristics, an ice slurry production system, an ice slurry production device, and an ice slurry production method.

### Brief Description of Drawings

FIG. 1 is an illustration diagram schematically showing an ice slurry production system related to a first embodiment;
FIG. 2 is an illustration diagram schematically showing an ice-making part;
FIG. 3 is an illustration diagram schematically showing a disc part;
FIG. 4 is an illustration diagram schematically showing a method of manufacturing the disc part;
FIG. 5 is a cross-sectional view showing a nano-mixer in which part thereof is omitted;
FIG. 6 is an illustration diagram showing a mixing element;
FIG. 7 is an illustration diagram schematically showing a method of generating nitrogen nanobubbles;
FIG. 8 is an illustration diagram schematically showing functions of nitrogen microbubbles and nitrogen nanobubbles;
FIG. 9A is an illustration diagram showing a refrigerated state of a Pacific saury in Example, FIG. 9B is an illustration diagram showing an eye of a Pacific saury in Example, and FIG. 9C is an illustration diagram showing the blood of a Pacific saury in Example;
FIG. 10 is a table for explaining results of comparison of ordinary ice and ice slurry in the first embodiment; and
FIG. 11 is an illustration diagram schematically showing a refrigeration container related to a second embodiment.

### Description of Embodiments

### <First embodiment>

Hereinafter, ice slurry, an ice slurry production system, and an ice slurry production device used in the ice slurry production system related to a first embodiment of the present invention will be described based on the drawings.

Ice slurry related to the first embodiment is used for refrigerated transportation and refrigerated storage of refrigerated products such as fresh fish. The ice slurry is ice slurry used for refrigeration of objects to be refrigerated. The ice slurry is a mixture of saline solution, which is isotonic or substantially isotonic with the objects to be refrigerated and contains at least nitrogen nanobubbles from among nitrogen microbubbles and nitrogen nanobubbles, and flake ice that is the frozen saline solution. The dissolved oxygen in the ice slurry is 1.0 mg/L or less.

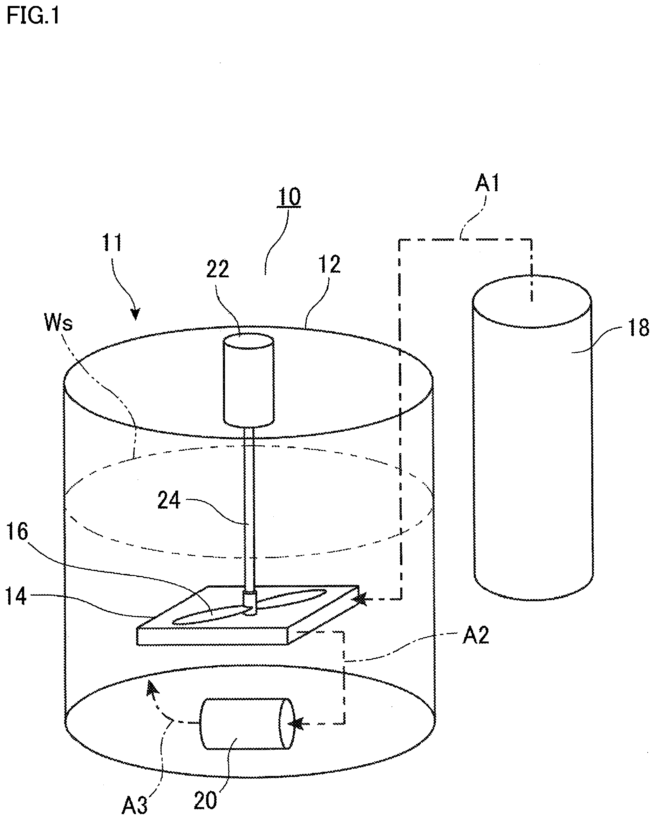

FIG. 1 schematically shows an ice slurry production system 10 and an ice slurry production device 11 for producing the ice slurry related to the first embodiment. The ice slurry production system 10 includes an ice slurry storage tank (hereinafter referred to as "storage tank") 12, a disc part 14, a sweeping part 16, a liquid nitrogen tank 18, a nano-mixer 20, etc. Furthermore, the ice slurry production system 10 includes a motor 22 for rotating the sweeping part 16, a rotary shaft 24 for transmitting the rotational force of the motor 22 to the sweeping part 16, and so on.

In the specific example shown in FIG. 1, the ice slurry production device 11 is constituted by the motor 22, the rotary shaft 24, the disc part 14, the sweeping part 16, and the nano-mixer 20. However, the scope of the equipment included in the ice slurry production device 11 is not limited to the specific example in FIG. 1.

For example, the ice slurry production device 11 may be constituted only by the disc part 14 and the sweeping part 16. In this case, the motor 22, the rotary shaft 24 and the nano-mixer 20 are equipment not included in the ice slurry production device 11. The ice slurry production device 11 may also include the storage tank 12 and the liquid nitrogen tank 18. In this case, the configuration of the ice slurry production system 10 and the ice slurry production device 11 are the same.

### <Flake ice storage tank and brine>

The storage tank 12 is a specific example of an ice slurry production tank. In the specific example shown in FIG. 1, the storage tank 12 is an aqueous solution tank with the upper part open and contains brine Ws (indicated by the chain double-dashed line in FIG. 1), which is the undiluted solution for the ice slurry. A saline solution of a predetermined concentration (1% here) is used as the brine Ws.

The concentration of the brine Ws is set by taking into account the salt concentration in the cells of the object to be refrigerated (here, the body of fresh fish). In the first embodiment, the salt concentration of the brine Ws is adjusted to be about the same as that of fresh fish cells (about 1%). Therefore, there is a relationship between the brine Ws and the fresh fish that the osmotic pressure is the same (isotonic). In the case where the fish body is put into the produced ice slurry, water transfer from the ice slurry to the fish body is unlikely to occur. Consequently, it is difficult for water to enter the fish body, and it is difficult for the fish body to swell due to water absorption.

In the brine Ws in the storage tank 12, the disc part 14, the sweeping part 16, and the nano-mixer 20 are arranged. Outside the brine Ws, the motor 22 is arranged. In the specific example of FIG. 1, the storage tank 12 supports the motor. The support of the motor 22 by the storage tank 12 can be, though not shown, but for example, performed by fixing a frame formed by a combination of several angle bars to the storage tank 12 and installing the motor 22 on this frame.

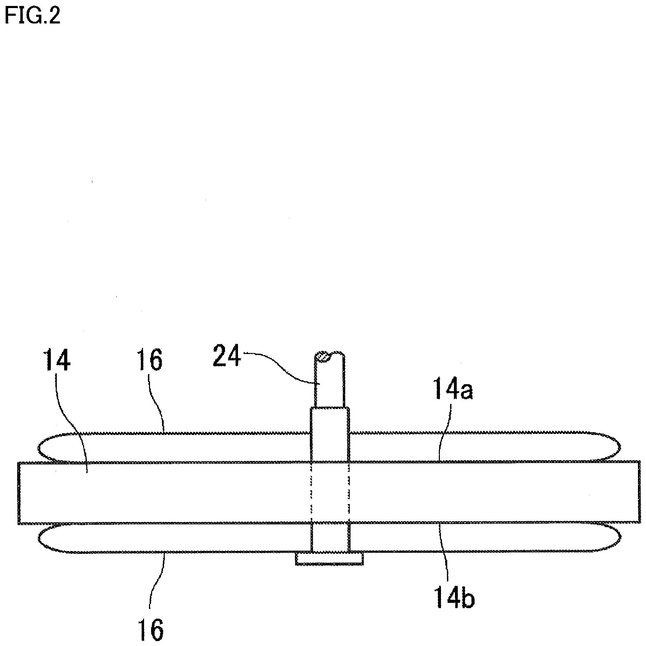

The disc part 14 and the sweeping part 16 in the storage tank 12 are suspended via the rotary shaft 24 connected to the motor 22. FIG. 2 schematically shows the relationship between the disc part 14 and sweeping part 16, and the rotary shaft 24. FIG. 2 will be described later.

The storage tank 12 should be capable of storing the brine Ws, as well as accommodating the disc part 14, the sweeping part 16, and the nano-mixer 20, and installing the motor 22. In addition to a circular shape, the storage tank 12 can adopt various shapes such as triangular, square, polygonal, or elliptical.

The perimeter of the storage tank 12 may be enclosed with a heat insulating material. As the heat insulating material, it is possible to adopt a variety of common ones. In the case where only walls of the storage tank 12 can obtain sufficient heat insulation properties, the heat insulating material around the storage tank 12 can be omitted appropriately. In addition, the storage tank 12 may be one with built-in heat insulating material or one with hollow walls.

### <Disc part>

The disc part 14 is a specific example of the equipment that constitutes the ice production unit. The ice production unit may be configured with only the disc part 14, or the disc part 14 and the sweeping part 16. Or the ice production unit may be configured to include the disc part 14, the sweeping part 16, and the motor 22.

In the specific example in FIG. 1, the disc part 14 is formed of a metal plate having a rectangular (here square) shape. The size (dimensions) of the disc part 14 can be, for example, about 30 cm square in the outer shape and about 30 mm in the thickness of the plate. Here, the disc part 14 is not limited to the rectangular shape, but may have a circular shape.

As shown in FIG. 2, the upper surface (plate surface 14a) and the lower surface (plate surface 14b) of the disc part 14 are processed to be almost flat and parallel to each other. Copper and copper alloys with high thermal conductivity are adopted as the material of the disc part 14. In the first embodiment, the disc part 14 is formed by casting. The surface of the disc part 14 is plated by a metal that has wear resistance (for example, chromium). Here, as the material of the disc part 14, it is possible to adopt aluminum, iron, or stainless steel, etc., in addition to copper and copper alloys.

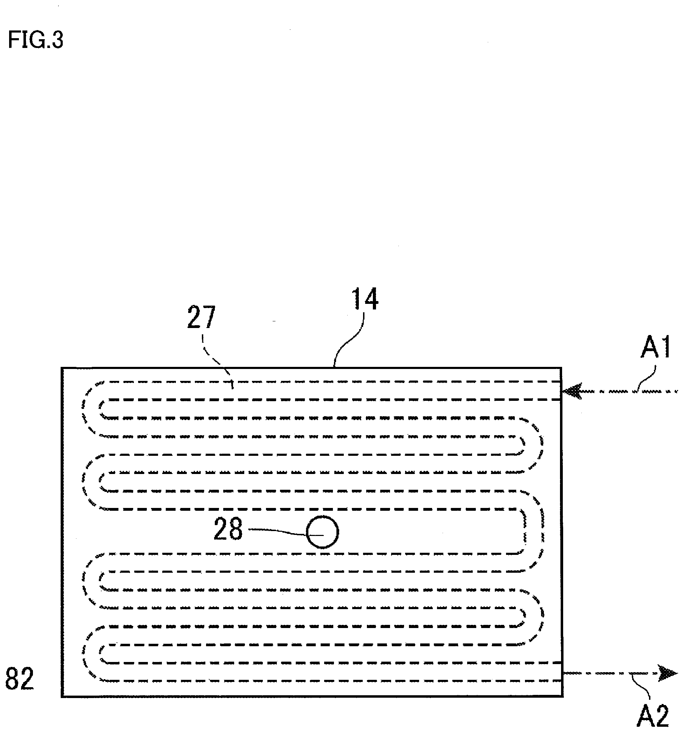

Inside the disc part 14, a single refrigerant path 27 is formed as indicated by broken lines in FIG. 3. The refrigerant path 27 is a hole formed in a serpentine pattern including linear portions extending parallel to each other and U-shaped bent portions. The disc part 14 is provided with a through hole 28 for passing the rotary shaft 24. The rotary shaft 24 passes through the through hole 28 and passes through the disc part 14 in the thickness direction. The refrigerant path 27 is formed to avoid the through hole 28.

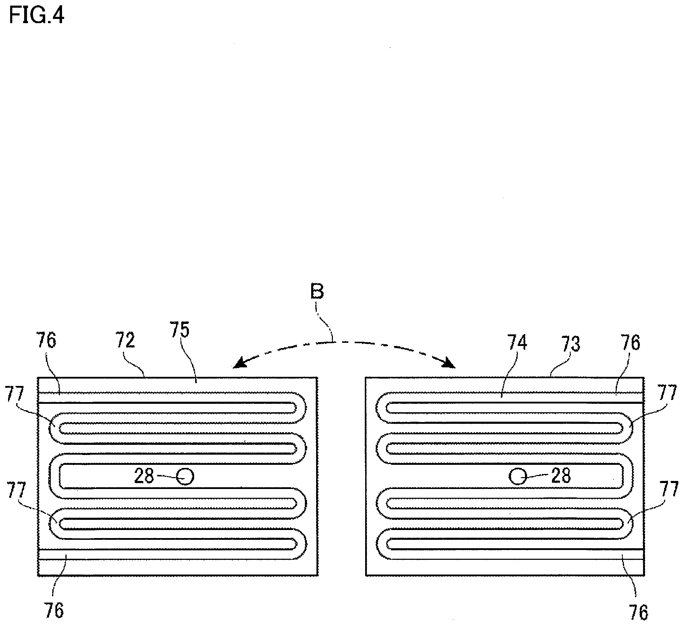

The disc part 14 can be produced, for example, as shown in FIG. 4. FIG. 4 schematically shows a method of producing the disc part 14. The disc part 14 is formed by causing half-shaped first plate 72 and second plate 73 to face each other, overlapping and joining thereof as indicated by the arrow B.

The first plate 72 and the second plate 73 are formed by casting or cutting. In addition, the first plate 72 and the second plate 73 have similar external dimensions, and each of which has a thickness of about 15 mm. In the first plate 72 and the second plate 73, groove portions 74 and 75, which serve as the refrigerant paths 27, are formed. The groove portions 74 and 75 have a number of linear portions 76 formed in parallel with one another and U-shaped portions 77 connecting the linear portions 76.

Both end portions of groove portions 74 and 75 open in a semicircular shape (illustration is omitted) at the end surfaces of the first plate 72 and the second plate 73. The groove portions 74 and 75 are formed in a mirror-image relation so that they are line symmetrical to each other. The single refrigerant path 27 is formed by superimposing the first plate 72 and the second plate 73. By forming the disc part 14 as described above, it is possible to form the refrigerant path 27 without drilling the disc part 14 or connecting the U-shaped tubes.

### <Sweeping part>

The sweeping part 16 is a specific example of the equipment that constitutes the ice production unit together with the disc part 14. In the specific example of the first embodiment, the sweeping part 16 is formed in a shape of the propeller with two blades, as schematically shown in FIG. 1. In addition, as schematically shown in FIG. 2, the sweeping parts 16 are located to face the plate surfaces 14a and 14b of the disc part 14, respectively.

The sweeping part 16 is coupled to a rotary shaft 24 which passes through the disc part 14. The rotary shaft 24 is coupled to the motor 22 and is driven by the motor 22 to rotate around the shaft center. As the rotary shaft 24 rotates, the sweeping part 16 rotates while facing the plate surfaces 14a and 14b of the disc part 14. As the motor 22, the one provided with a driving part and a deceleration part (gear part) in an integrated manner (geared motor) is adopted.

The sweeping part 16 has blade-like portions (reference sign is omitted), and the blade-like portions are placed to face each plate surface 14a and 14b of the disc part 14. The sweeping parts 16 may be provided to contact each of the plate surfaces 14a and 14b of the disc part 14. Alternatively, the sweeping parts 16 may be provided so that the blade-like portions have a clearance (gap) of a predetermined distance (for example, about 0.2 mm) with each of the plate surfaces 14a and 14b of the disc part 14.

As will be described later, the sweeping part 16 collides with the ice (illustration is omitted) adhered to the disc 14 and separates the ice from the disc part 14. In the case where the sweeping parts 16 are provided to contact each of the plate surfaces 14a and 14b of the disc part 14, the sweeping parts 16 separate the ice while being in contact with each of the plate surfaces 14a and 14b. In addition, in the case where the sweeping parts 16 are provided to have a clearance with the disc part 14, the sweeping parts 16 separate the ice using the turbulence generated between each of the plate surfaces 14a and 14b and the sweeping parts 16. In the case where the ice grows to the size of the clearance or larger, the sweeping parts 16 collide with the grown ice and separate the ice.

In addition to the propeller-blade-shape, a plate-shape or a buff-shape can be adopted as the shape and form of the sweeping part 16. As the material of the sweeping part 16, for example, metal, a synthetic resin, or the like can be adopted. In addition, as the stuffs for the sweeping part 16, for example, sponges, foam, brushes, scrubbing brushes, resin net, nonwoven, etc. can also be adopted. By processing these stuffs into various shapes, such as a propeller-blade-shape, plate-shape, or buff-shape, it is possible to produce the sweeping part 16.

### <Liquid nitrogen tank and liquid nitrogen>

The sweeping part 16 and the disc part 14 are arranged in the storage tank 12 and immersed in the brine Ws as shown in FIG. 1. Liquid nitrogen passes through the refrigerant path 27 in the disc part 14. The arrows A1 in FIGS. 1 and 3 indicate the flow of liquid nitrogen flowing into the disc part 14, and the arrows A2 indicate the flow of liquid nitrogen flowing out of the disc part 14.

The liquid nitrogen is forwarded from the liquid nitrogen tank 18 located outside of the storage tank 12 and is supplied to the refrigerant path 27 (FIG. 3) in the disc part 14 through a refrigerant tube (illustration is omitted). The liquid nitrogen tank 18 is a specific example of a liquid nitrogen supply source. In the specific example in FIG. 1, the liquid nitrogen that has passed through the disc part 14 is sent to the nano-mixer 20 and is used to generate liquid nitrogen bubbles (nitrogen bubbles). The configuration and function of the nano-mixer 20 will be described later.

The liquid nitrogen cools the disc part 14 by the cold energy thereof, and the disc part 14 cools the brine Ws flowing around. Then, by cooling the disc part 14 by the liquid nitrogen, the conditions are adjusted, and the ice precipitates on each of the plate surfaces 14a and 14b of the disc part 14. The precipitated ice forms microscopic ice around the disc part 14 and adheres thereto.

The adhered ice is swept away by the sweeping part 16 and separated from the disc part 14. The ice separated from the disc part 14 becomes flake ice in the shape of flakes (also referred to as flake-shaped, fragment-shaped, small-lump-shaped, granular-shaped, etc.), and is mixed into the brine Ws. The production of the flake ice continues, and the proportion of the ice in the brine Ws gradually increases. The ice slurry is produced in the storage tank 12 by continuously mixing the flake ice with the brine Ws.

### <Nano-mixer>

The nano-mixer 20 is a specific example of a nanobubble supply unit. In the specific example in FIG. 1, the nano-mixer 20 is immersed in the brine Ws. The nano-mixer 20 is supplied with the liquid nitrogen through the disc part 14. The liquid nitrogen that has cooled the disc part 14 and passed through the disc part is fed into the nano-mixer 20. In other words, in the nano-mixer 20, the liquid nitrogen that has cooled the disc part 14 is reused.

The nano-mixer 20 has a structure similar to that of the stationary fluid mixing device (Patent Documents 2 and 3 above). The nano-mixer 20 causes the liquid nitrogen to flow in a complex manner as will be described later, and generates nanometer-sized nitrogen gas bubbles (nitrogen nanobubbles) by the action of shearing, cavitation, and so on.

In general, bubbles can be classified into centibubbles, millibubbles, microbubbles, micro-nanobubbles, and nanobubbles depending on their size (diameter). Of these, centibubbles and millibubbles are bubbles of the size that are often seen in everyday (normal) life. Millibubbles are smaller than centibubbles and are classified as fine bubbles.

The size of microbubbles, micro-nano bubbles, and nanobubbles becomes smaller in this order. The size of microbubbles, for example, ranges from about several tens µm (micrometers) to 10 µm, and the size of micro-nanobubbles ranges from about not more than 10 µm to several hundred nm (nanometers). The size of nanobubbles is smaller than that of micro-nanobubbles.

The size of microbubbles is about the same as that of cells and colloidal particles, and the size of micro-nanobubbles is about the same as that of proteins and macromolecules. Furthermore, the size of nanobubbles is about the same as that of water clusters and water molecules. As for the nano-mixer 20 in the first embodiment, various types of ones can be adopted as long as microbubbles (nitrogen microbubbles) or nanobubbles ( nitrogen nanobubbles) of nitrogen can be generated in the brine Ws.

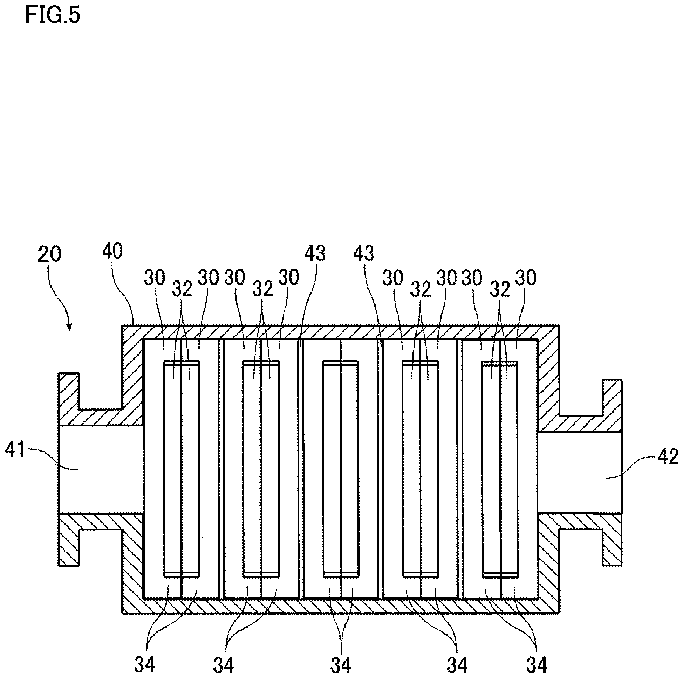

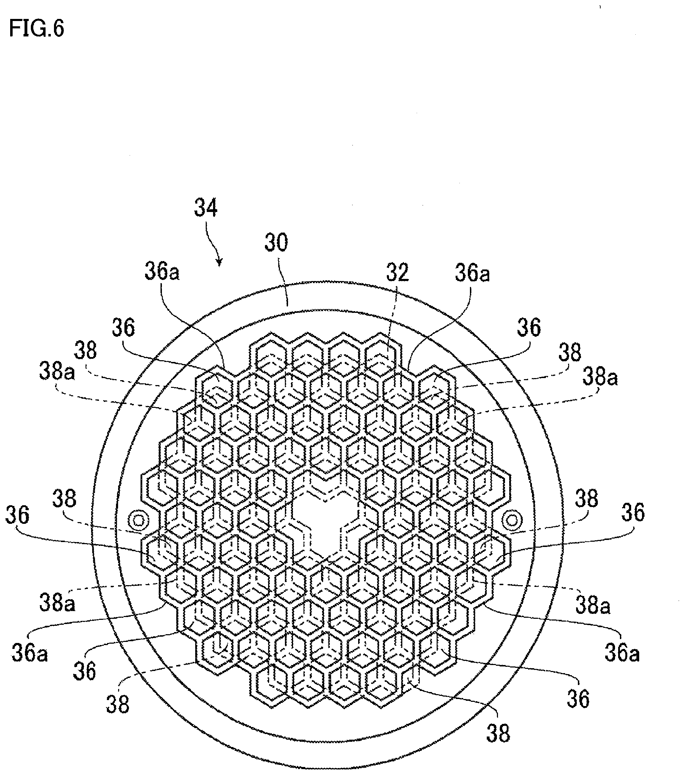

FIGS. 5 and 6 schematically shows a specific example of the nano-mixer 20. In the specific example shown in FIGS. 5 and 6, a stationary fluid mixing device without any portion performing rotational or linear motion is adopted as the nano-mixer 20.

In this type of nano-mixer 20, the mixing element 34 is formed by overlapping a first circular plate 30 and a second circular plate 32 each having a honeycomb structure in the axial direction. The second circular plate 32 with relatively small diameter is accommodated in an inner recess of the first circular plate 30 with large diameter. Many small chambers 36 and 38 of regular hexagonal shapes are formed in the first circular plate 30 and the second circular plate 32, respectively. In FIG. 5, illustration of the small chambers 36 and 38 in the first circular plate 30 and the second circular plate 32, respectively, and hatching showing the cross-sections of the first circular plate 30 and the second circular plate 32 are omitted to avoid complicatedness.

The arrangement of small chambers 36 in the first circular plate 30 and the arrangement of small chambers 38 on the second circular plate 32 differ from each other with respect to the center of the circle in the first circular plate 30 and the second circular plate 32. When the first circular plate 30 and the second circular plate 32 are overlapped concentrically in axial direction, the small chambers 36 and 38 connect spatially while being offset from each other.

The mixing elements 34 are arranged coaxially and in multiple stages in a stepped cylindrical split case 40. In the specific example in FIG. 5, ten mixing elements 34 are used. In the split case 40, there are five sets of mixing elements 34, each set including two mixing elements 34 placed opposite each other.

Inside the mixing element 34, the many small chambers 36 and 38 are spatially connected not only to the small chambers 36 and 38 facing each other in the axial direction, but also to the other small chambers 36 and 38. The route that spatially connects many small chambers 36 and 38 has linear portions, meandering portions, bent portions, etc. Many small chambers 36 and 38 are also connected to the axial and radial directions of the first circular plate 30 and the second circular plate 32.

At one end of the nano-mixer 20 in the axial direction (left side in FIG. 5), an inlet 41 is formed, and at the other end (right side in FIG. 5), an outlet 42 is formed. The inlet 41 of the nano-mixer 20 is continuously supplied with the liquid nitrogen having passed through the disc part 14, as indicated by the arrow A2. The liquid nitrogen supplied to the nano-mixer 20, though illustration thereof is omitted, passes through a complex route inside the frontmost (upstream side) mixing element 34 to the next stage mixing element.

A gap 43 is also formed between the mixing elements 34 arranged in the axial direction, and liquid nitrogen having passed through the upstream side mixing element 34 flows in the radial or axial direction of the mixing element 34 and flows into the mixing element 34 in the next stage.

While passing through the mixing elements 34, and the liquid nitrogen flows in a complex manner by repeatedly combining the states such as collisions with the sidewalls, collisions between the fluids, dispersion, merging, meandering, and swirling. While the liquid nitrogen passes through the mixing elements 34, dispersion and mixture of fluids are conducted by hydrodynamic shearing produced by swirling, hydrodynamic shearing produced when the liquid nitrogen passes between the walls of the small chambers 36 and 38 as an orifice, crushing due to impact fracture, shearing produced when the liquid nitrogen passes through the upper end surface of the side wall, mechanical cavitation, etc.

Every time the liquid nitrogen passes through five sets of (10) mixing elements 34, the liquid nitrogen repeats the above-described dispersion and mixture to produce nanometer-sized fine bubbles of nitrogen gas (nitrogen nanobubbles).

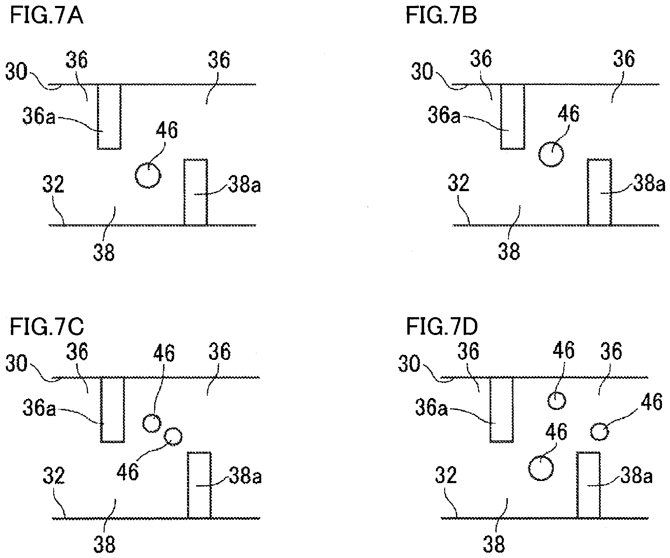

FIGS. 7A to 7D schematically show generation of nitrogen microbubbles and nitrogen nanobubbles in the mixing element 34. In FIGS. 7A to 7D, the liquid nitrogen flows from the left side to the right side of the figure as a whole. As mentioned above, liquid nitrogen flows in a complex manner with combinations of the states such as right-angle collision, dispersion, merging, meandering, and swirling, but as a whole, flows from the left side to the right side of the figure.

As shown in FIG. 7A, nitrogen bubbles 46 generated in one small chamber 36 pass through the sidewall 36a of the small chamber 36 and the sidewall 38a of the small chamber 38 and split under hydrodynamic shearing, as shown in FIGS. 7B to 7D. The repeated splitting of the nitrogen bubbles 46 causes gradual reduction of the nitrogen bubbles 46, which results in generation of nitrogen microbubbles and nitrogen nanobubbles. The nitrogen nanobubbles generated in the nano-mixer 20 are released from the exit 42 of the nano-mixer 20 to the brine Ws, as indicated by the arrow A3 in FIG. 1.

By continuously flowing the liquid nitrogen into the nano-mixer 20, a large number of nitrogen nanobubbles are generated, and the nitrogen nanobubbles are continuously supplied into the brine Ws. In addition to the nitrogen nanobubbles, nitrogen microbubbles that did not split to the size of nitrogen nanobubbles are also supplied into the brine Ws.

Here, other than the above-described stationary type, there are also mechanical mixing devices that can be used as the nano-mixer 20. In addition, there are some well-known mixing devices that use the ultra-high-speed rotation systems or the pressure dissolution methods.

The mechanical mixing device generates bubbles by rotating a rotation body in a fluid. The ultra-high-speed rotation system generates a vortex by the high-speed rotation of a blade, and the bubble is miniaturized by the collapse of the vortex. The ultra-high-speed rotation system can generate the microbubbles with low concentration and continuously generate microbubbles. The pressure dissolution method supersaturation-dissolves the gas under high pressure and generates a highly concentrated microbubbles by pressure release. If the nitrogen nanobubbles can be generated by these types of mixing devices, it is possible to use a nano-mixer 20 that adopts these methods.

### <Function of nitrogen microbubbles and nitrogen nanobubbles>

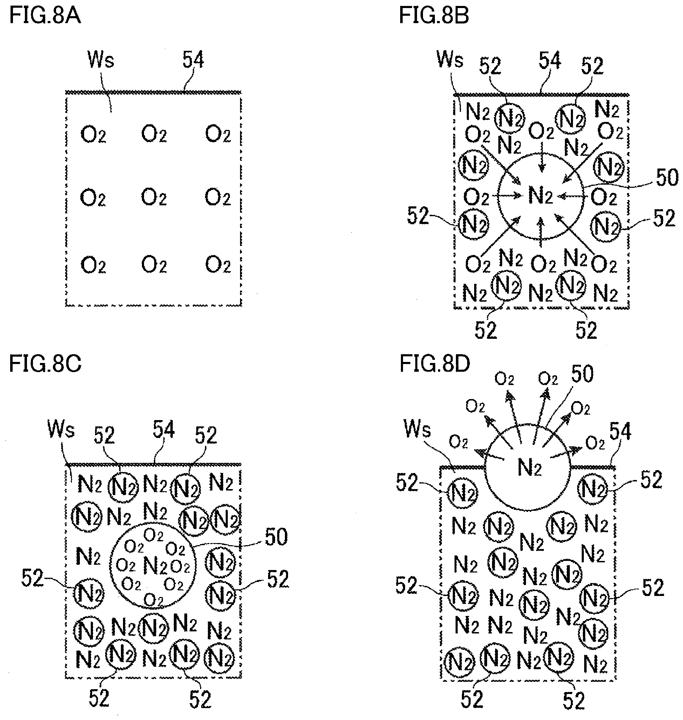

FIGS. 8A to 8D schematically show the function of the nitrogen nanobubbles in the ice slurry. In FIGS. 8A to 8D, O₂ represents oxygen (oxygen molecule), and N₂ represents nitrogen (nitrogen molecule). Furthermore, a circle with the letter N₂ indicates a nitrogen microbubble or a nitrogen nanobubble. In FIGS. 8B to 8D, the nitrogen microbubble is assigned with a reference sign 50 and the nitrogen nanobubble is assigned with a reference sign 52.

In FIG. 8A, oxygen in the atmosphere is dissolved in the brine Ws, and the brine Ws is saturated with the dissolved oxygen. As shown in FIG. 8B, when the nitrogen microbubbles 50 and the nitrogen nanobubbles 52 are continuously supplied to the brine Ws, the nitrogen microbubbles 50 and the nitrogen nanobubbles 52 are dissolved and mixed in the brine Ws. As a result, oxygen is diffused (oxygen diffusion occurs) in the brine Ws, and oxygen enters the nitrogen microbubble 50, which is relatively large in grain shape.

Subsequently, the nitrogen microbubble 50 containing oxygen as shown in FIG. 8C floats upward in the brine WS as shown in FIG. 8D. The nitrogen microbubble 50, which has reached the liquid level 54 of the brine Ws, ruptures, and oxygen contained therein is released into the atmosphere. In the brine Ws, oxygen is substituted by nitrogen (nitrogen substitution takes place) and nitrogen remains. The oxygen in the brine Ws is expelled by continuous supply of the liquid nitrogen. The amount of dissolved oxygen in the brine Ws decreases and the concentration of the nitrogen nanobubbles (nanobubble concentration) increases. As a result, the brine Ws in which nitrogen is dissolved is produced.

The nitrogen microbubbles 50 float upward faster in brine Ws than the nitrogen nanobubbles 52. Therefore, the nitrogen microbubbles 50 are effective in improving the efficiency of nitrogen substitution. In addition, the nitrogen nanobubbles 52 are effective in maintaining hypoxic conditions because the nitrogen nanobubbles 52 stay relatively long time in the brine Ws.

In this way, by supplying the brine Ws with the nitrogen microbubbles 50 and the nitrogen nanobubbles 52, the oxygen concentration decreases, and the nitrogen concentration increases in the brine Ws. The amount of dissolved oxygen in the brine Ws is, for example, 1.0 mg/L to 0.3 mg/L. More preferably, the amount of dissolved oxygen is 0.6 mg/L to 0.3 mg/L, and still more preferably 0.4 mg/L to 0.3 mg/L.

### <Application purposes and advantages of ice slurry>

As described above, the brine Ws is adjusted to be isotonic with the fresh fish to be refrigerated. The disc part 14 is immersed in the brine Ws, and the liquid nitrogen passes through the disc part 14. The disc part 14 is cooled by the liquid nitrogen, and then ice adheres to the disc part 14. The ice adhered to the disc part 14 is swept away by the sweeping part 16 and separated from the disc part 14. The separated ice (flake ice) is mixed into the brine Ws to produce the ice slurry.

The brine Ws is supplied with nitrogen microbubbles and nitrogen nanobubbles. Of the various nitrogen bubbles, at least nitrogen nanobubbles are dispersed in the flake ice mixed in the brine Ws. The flake ice is produced by freezing the brine Ws, in which the amount of dissolved oxygen has been reduced. Therefore, by taking the ice slurry out of the storage tank 12, transferring the ice slurry to a container for refrigerating fresh fish (refrigeration container, illustration is omitted), and placing the fresh fish in the refrigeration container, the fresh fish is to be refrigerated by the ice slurry with a small amount of dissolved oxygen. The objects to be refrigerated to be placed in the refrigeration container may be live fish or shellfish.

Freshness of fish is mainly affected by oxidation of blood, oil and fat, and decay (growth of aerobic bacteria). Oxidation and decay cause discoloration, generation of odors (oxidized odor, foul odor), alteration (hardening and softening), and deterioration of taste and texture. Oxidation and decay are caused by the growth of aerobic bacteria. Oxygen is a major cause of oxidation and decay.

By using the ice slurry in the first embodiment, fresh fish can be refrigerated in an environment with a low amount of dissolved oxygen. Therefore, the oxidation of fish and the growth of aerobic bacteria can be suppressed compared to a case using conventional ice slurry in which the amount of dissolved oxygen is not reduced. Then, an environment as if fish were being refrigerated in sea water with no (little) oxygen can be provided. Such ice slurry can be called "isotonic ice slurry containing nitrogen nanobubbles" or "isotonic ice slurry without oxygen".

In addition, the disc section 14 is cooled by the liquid nitrogen in producing the ice slurry. Because of this, the disk part 14 can be easily reduced in temperature. Furthermore, production of the flake ice and the ice slurry can be efficiently performed.

The nano-mixer 20 reuses the liquid nitrogen that has passed through the disc part 14 and contains nitrogen nanobubbles in the saline solution. The liquid nitrogen is used both for cooling the disc part 14 and for generating the nitrogen nanobubbles. Therefore, the liquid nitrogen can be utilized effectively and efficiently.

### <Refrigeration system using ice slurry>

To refrigerate the objects to be refrigerated, the refrigeration container containing the ice slurry is used to transport and preserve the objects to be refrigerated. The refrigeration container shall be the one having a heat insulating structure or the one having a heat insulating material arranged around thereof. The temperature of the ice slurry in the refrigerated container is determined so that the object to be refrigerated (here, fresh fish) can be preserved intact.

For example, the temperature of the ice slurry is controlled to be maintained at about - 1°C. The temperature of the ice slurry can be controlled by using the refrigeration container in an environment where the temperature of the ice slurry can be maintained. In addition, in the case where the temperature of the ice slurry increases and the ice slurry melts, it is possible to maintain the ambient temperature of the objects to be refrigerated by replacing the melted ice slurry with new ice slurry. In this way, the refrigerated products can be transported and preserved while keeping high quality thereof by refrigerating the objects to be refrigerated with ice slurry at about -1°C.

By setting the temperature of the environment around the fresh fish to a negative temperature zone so that the fish body does not freeze, it is possible to maintain the fish body with high freshness for a long period of time. In addition, since the temperature of the ice slurry is easily maintained uniformly throughout the whole, it is unlikely that uneven temperature occurs in the refrigeration container. For this reason, fresh fish are also refrigerated without uneven temperature. In addition, in the first embodiment, the ice slurry has the same osmotic pressure as the fish body, which makes it difficult for water to enter the fish body. For this reason, it is unlikely that the fish body swells due to water absorption. In addition, the ice slurry at about -1°C is soft, snow-like ice slurry. Therefore, the fish body is less likely to be scratched.

The ice slurry and ice in the first embodiment satisfy the following conditions (a) to (c).
(a) the temperature of the ice after melting completely is lower than 0°C.
(b) a rate of change of the solute concentration in an aqueous solution generated from the ice in the melting process is 30% or less.
(c) the temperature is between the freezing point of the animal, plant, or a part thereof and + 0.5°C of the freezing point.

The fact that ice slurry and ice that satisfy these conditions are suitable for refrigeration of animals and plants, such as fish, and organs for transplantation of human beings is disclosed in Japanese Patent Application No. 2016-150299 (Japanese Patent Application Laid-Open Publication No. 2018-017490, Patent Document 1 above) inherited by the applicant. The following is incorporation of the description in Patent Document 1. Note that "inventor" in the incorporated description refers to the inventor of the invention disclosed in Patent Document 1. In addition, various technical matters in the incorporated description may be applied to the first embodiment by replacing "the present invention" with, for example, "the first embodiment", unless there is a particular hindrance.

Since the ice in the present invention satisfies the condition (c) described above, the ice is excellent in its ability to maintain a low-temperature state without freezing the animal or plant or a part thereof. In addition, since the ice satisfies the conditions (a) and (b) described above, the ability to maintain a low-temperature state is even more excellent. This point will be described below.

It has been known that when a solute is melted in water, the solidifying point of the aqueous solution decreases, which is solidifying point depression. The solidifying point of conventional aqueous solutions in which solutes such as common salt have melted is lowered due to the action of the solidifying point depression. That is, the ice made of such an aqueous solution is the ice solidified at a lower temperature than the ice made of fresh water. Here, the heat required when ice converts to water is called "latent heat," which is not accompanied with temperature change. Due to such a latent heat effect, ice with a lowered solidifying point continues to be stable at temperatures below the solidifying point of fresh water when melting; accordingly, a state in which cold energy is stored is remained. Therefore, the refrigeration capacity for objects to be cooled should normally be higher than that of the ice made of fresh water. However, the inventors found that conventional ice, for example, produced by cooling from the outside, actually does not have sufficient capacity to refrigerate objects to be refrigerated due to facts such as fast increase in its own temperature over time during cooling. The inventors examined the reason thereof, and found that even if ice was produced from an aqueous solution containing a solute such as salt using the conventional method, ice without the solute was actually produced first before the aqueous solution froze, and as a result, either a mixture of solute-free ice and solute or only a small amount of ice with a lowered solidifying point was produced, which prevented the production of ice with high refrigeration capacity.

In contrast, the inventors succeeded in producing ice of an aqueous solution with a lowered solidifying point by a certain method (details will be described later). Since such ice in the present invention satisfies the conditions (a) to (c) described above, the ice is excellent in its ability to refrigerate animals and plants or parts thereof without freezing.

Hereinafter, detailed description will be given of the ice of an aqueous solution containing a solute, which satisfies the conditions (a) to (c) described above, used in the production method of the present invention.

### (Temperature of ice after melting completely)

In relation to the above (a), the ice of the present invention is an aqueous solution containing a solute; therefore, the temperature of the solidifying point is lower than that of fresh water (water without solute). For this reason, the ice has a feature that the temperature thereof after melting completely is lower than 0°C. "Temperature after melting completely" refers to the temperature of water at the time point at which the entire ice melts to water after melting of the ice in the present invention is started by putting the ice in an environment at a temperature equal to or higher than the melting point (for example, at room temperature and atmospheric pressure).

The temperature after melting completely is not particularly limited as long as it is lower than 0°C, and the temperature can be appropriately changed by adjusting the kind and concentration of the solute. It is preferable that the temperature after melting completely is lower, from the viewpoint of a higher refrigeration capacity, and specifically, the temperature is preferably -1°C or lower (-2°C or lower, -3°C or lower, -4°C or lower, -5°C or lower, -6°C or lower, -7°C or lower, -8°C or lower, -9°C or lower, -10°C or lower, -11°C or lower, -12°C or lower, -13°C or lower, -14°C or lower, -15°C or lower, -16°C or lower, -17°C or lower, -18°C or lower, -19°C or lower, -20°C or lower, etc.). On the other hand, there are some cases in which the solidifying point is preferably close to the freezing point of the object to be cooled (for reasons such as preventing damage to fresh animals and plants); in such cases, it is preferable that the temperature after melting completely is not too high, and for example, the temperature is preferably -21°C or higher (-20°C or higher, -19°C or higher, -18°C or higher, -17°C or higher, -16°C or higher, -15°C or higher, -14°C or higher, -13°C or higher, -12°C or higher, -11°C or higher, -10°C or higher, -9°C or higher, -8°C or higher, -7°C or higher, -6°C or higher, -5°C or higher, -4°C or higher, -3°C or higher, -2°C or higher, -1°C or higher, -0.5°C or higher, etc.).

### (Rate of change of the solute concentration)

In relation to the above (b), the ice in the present invention has a feature that a rate of change of the solute concentration in an aqueous solution to be generated from the ice in the melting process (hereinafter abbreviated as the "rate of change of the solute concentration" in some cases in the present specification) is 30% or less. Even in the method described in Patent Document 1, ice with a slightly lowered solidifying point may occur in some cases, but most of the ice is a mixture of ice of water without solute and solute crystals, and therefore the refrigeration capacity is not sufficient. In the case where a large mixture of ice of water containing no solute and solute crystals is contained, the elution speed of the solute accompanied with melting is unstable when the ice is subjected to melting conditions; the closer to the beginning of melting, the more solute is eluted, and as the melting progresses, the amount of elution of the solute decreases, and the closer to the completion of the melting, the less the amount of elution of the solute decreases. In contrast, since the ice of the present invention is made from an aqueous solution including a solute, the ice has a feature that the change of the elution speed of the solute in the melting process is small. Specifically, the rate of change of the solute concentration of the aqueous solution generated from the ice in the melting process is 30%. Note that "the rate of change of the solute concentration of the aqueous solution generated from the ice in the melting process" means the proportion of the concentration of the aqueous solution at the time of completion of melting to the concentration of the solute in the aqueous solution generated at an arbitrary time in the melting process. Note that "solute concentration" means the concentration of the mass of the solute in the aqueous solution.

The rate of change of solute concentration of the ice in the present invention is not limited as long as the rate is within 30%; however, a smaller rate of change means that purity of the ice of the aqueous solution with a lowered solidifying point is high purity, that is, the refrigeration capacity is high. From this viewpoint, it is preferable that the rate of change of the solute concentration is 25% or less (24% or less, 23% or less, 22% or less, 21% or less, 20% or less, 19% or less, 18% or less, 17% or less, 16% or less, 15% or less, 14% or less, 13% or less, 12% or less, 11% or less, 10% or less, 9% or less, 8% or less, 7% or less, 6% or less, 5% or less, 4% or less, 3% or less, 2% or less, 1% or less, 0.5% or less, etc.). On the other hand, the rate of change of the solute concentration may be 0.1% or more (0.5% or more, 1% or more, 2% or more, 3% or more, 4% or more, 5% or more, 6% or more, 7% or more, 8% or more, 9% or more, 10% or more, 11% or more, 12% or more, 13% or more, 14% or more, 15% or more, 16% or more, 17% or more, 18% or more, 19% or more, 20% or more, etc.).

### (Temperature)

In relation to the above (c), the ice in the present invention has a temperature between a freezing point of the animal or plant or a part thereof and the freezing point + 0.5°C. The temperature of the ice is not limited if the range is satisfied, but the closer to the temperature of the freezing point, the more effective to maintain a low temperature. For this reason, it is preferable that the temperature of the ice in the present invention is the freezing point + 0.4°C or less, more preferable to be the freezing point + 0.3°C or less, still more preferable to be the freezing point + 0.2°C or less, further preferable to be the freezing point of +0.1°C or less, and especially preferable to be the freezing point + 0.05°C or less. On the other hand, the higher the temperature of the ice, the better the effect of preventing freezing of an animal or plant or a part thereof. For this reason, it is preferable that the temperature of the ice is equal to the freezing point + 0.01°C or more, more preferable to be the freezing point + 0.05°C or more, still more preferable to be the freezing point + 0.1°C or more, further preferable to be the freezing point of + 0.2°C or more, furthermore preferable to be the freezing point + 0.3°C or more, and especially preferable to be the freezing point + 0.4°C or more. Note that the freezing point of an animal or plant or a part thereof may be the freezing point of the whole "animal or plant or a part thereof" or at least a part of the "animal or plant or a part thereof.

### (Solute)

The kind of solute to be contained in the ice of the present invention is not particularly limited as long as it is a solute when water is used as a solvent, and it can be appropriately selected depending on the desired solidifying point, the application purpose of ice to be used, and the like. Specific examples of the solute include a solid solute and a liquid solute, and specific examples of a typical solute include salts (inorganic salts, organic salts, and the like). Particularly, common salt (NaCl) among the salts is preferable because it does not excessively lower the temperature of the solidifying point, and thereby it is suitable to cool fresh animals and plants or a part thereof. In addition, the common salt is preferable from the viewpoint of easy procurement as well since it is contained in seawater. Moreover, specific examples of the liquid solute include ethylene glycol. Note that the solute may be contained singly, or two or more kinds thereof may be contained.

The concentration of the solute contained in the ice of the present invention is not particularly limited, and the concentration can be appropriately selected depending on the kind of solute, the desired solidifying point, the application purpose of the ice to be used, and the like, taking into consideration the objects to be refrigerated. For example, in the case of using common salt as a solute, it is possible to decrease the solidifying point of the aqueous solution and obtain a high refrigeration capacity, but the concentration can also be changed; for example, the concentration of common salt may be 0.5% (w/v) or more (1% (w/v) or more, 2% (w/v) or more, 3% (w/v) or more, 4% (w/v) or more, 5% (w/v) or more, 6% (w/v) or more, 7% (w/v) or more, 8% (w/v) or more, 9% (w/v) or more, 10% (w/v) or more, 11% (w/v) or more, 12% (w/v) or more, 13% (w/v) or more, 14% (w/v) or more, 15% (w/v) or more, 16% (w/v) or more, 17% (w/v) or more, 18% (w/v) or more, 19% (w/v) or more, 20% (w/v) or more, etc.), or may be 23% (w/v) or less (20% (w/v) or less, 19% (w/v) or less, 18% (w/v) or less, 17% (w/v) or less, 16% (w/v) or less, 15% (w/v) or less, 14% (w/v) or less, 13% (w/v) or less, 12% (w/v) or less, 11% (w/v) or less, 10% (w/v) or less, 9% (w/v) or less, 8% (w/v) or less, 7% (w/v) or less, 6% (w/v) or less, 5% (w/v) or less, 4% (w/v) or less, 3% (w/v) or less, 2% (w/v) or less, 1% (w/v) or less, etc.).

When the osmotic pressure occurs between an animal or plant or a part thereof that is to be refrigerated and an aqueous solution generated from the melted ice that is to refrigerate thereof, the components inside the animal or plant or a part thereof bleed out, or the solute contained in the ice flows into the animal or plant or the part thereof. To suppress this, it is preferable to adjust the solute concentration of the aqueous solution constituting the above ice to be isotonic with the animal or plant or the part thereof; however, in the case of ice of an aqueous solution that does not satisfy the above conditions (a) and (b) in the present invention, even when the ice is actually brought into contact with the object to be refrigerated, the osmotic pressure easily occurs between the animal or plant or the part thereof that is to be refrigerated and the aqueous solution generated from the melted ice that is to refrigerate thereof, and it is difficult to achieve continuous isotonicity. The reason for this is thought to be that the ice of an aqueous solution that does not satisfy the above conditions (a) and (b) in the present invention, is, in short, not the ice of a pure aqueous solution itself, but in fact, a mixture of ice of fresh water and solute occupies most of the ice. In the case of such a mixture, the elution concentration of the solute tends to be high at the beginning of melting, and the rate of change in the elution concentration is large; therefore, the above condition (b) is not satisfied, and even if the concentration is adjusted to be isotonic when the aqueous solution is frozen, it is impossible to achieve continuous isotonicity when the ice is used for refrigeration and melted. In contrast thereto, the ice of the aqueous solution in the present invention satisfies the above condition (b) because it is the ice of the aqueous solution itself, and it is possible to achieve continuous isotonicity due to the small change in the elution concentration of the solute in the melting process.

On the other hand, the above-described isotonicity is one of the factors for achieving the adjustment of solute concentration, and the melting point of the ice changes by adjusting the solute concentration. Then, in the case where the concentration of the solute is adjusted to satisfy the above condition (c) (that is, to ensure that the temperature is exactly between the freezing point of the animal and plant or a part thereof and the freezing point + 0.5°C), it is difficult to adjust the concentration to achieve isotonicity with the animal or plant or a part thereof. However, in the ice of the present invention, the solidifying point and melting point can be adjusted by adjusting the remaining heat by ice production (details will be described later) at the time of production; therefore, the ice can satisfy the above conditions (c) and achieve the above-described isotonicity more reliably.

It is preferable that the ice in the present invention be ice of seawater, water with salt added to seawater, or diluted water of seawater. Seawater, water with salt added to seawater, or diluted water of seawater can be easily procured on the spot when seawater fish, etc. are caught in the sea and refrigerated objects are produced on the spot. In addition, seawater, water with salt added to seawater, or diluted water of seawater is useful in terms of its high safety when animals, plants, or parts thereof are used as food, or used as organs for transplantation, etc. Furthermore, seawater, water with salt added to seawater, or diluted water of seawater makes it possible to cut down the cost.

The animals or plants, or parts thereof to be refrigerated are not particularly limited; however, fresh animals or plants, or parts thereof are suitable for refrigeration. Specific examples of the fresh animals and plants include fresh fish such as saltwater fish and fresh vegetables. As the parts of fresh animals or plants, organs of animals (such as humans) are included. Among these, in particular, it is preferable that the animals or plants in the present invention be especially edible, such as fresh fish and fresh vegetables. In addition, when the objects to be refrigerated are seawater fish, it is preferable to set the NaCl concentration in the aqueous solution from more than 0% to less than 2%. Consequently, in the case where the object to be refrigerated is seawater fish, the ice in the present invention satisfies the above condition (c), and can achieve isotonicity with the seawater fish. Furthermore, if the NaCl concentration in the aqueous solution is from more than 0% to less than 2%, the melting completion temperature can be decreased to -1°C or lower, which is useful also in terms of suppressing multiplication of microorganisms in seawater fish. In addition, as the parts of animals or plants to be refrigerated, animal organs (for example, organs for transplantation) are suitable. Organs, for example, of the same human origin and the same isotonic concentration, have different freezing points in some cases, but as described above, according to the present invention, the ice is useful in the point that the ice can satisfy the above condition (c) and achieve the isotonicity.

The method of refrigeration is not particularly limited, and refrigeration may be carried out by directly bringing the ice into contact with the object to be refrigerated, or may be carried out indirectly (for example, by storing the ice in a container or the like and bringing the container into contact with the object to be refrigerated). The method of directly making the ice in contact with an object to be refrigerated is preferable because of the advantage of preventing drying. In addition, in the case where the ice is directly made in contact with an object to be refrigerated, if the ice does not satisfy the above condition (b), isotonicity cannot be achieved, and thereby direct contact results in adverse effects on the object to be refrigerated (bleeding, flowing of the solute components into the object to be refrigerated, and so on); however, since the ice in the present invention satisfies the above condition (b), the advantages by the direct contact can be enjoyed while the adverse effects on the object to be refrigerated can be suppressed by achieving continuous isotonicity.

The ice produced by the production method of the present invention has excellent refrigeration capacity and is thereby suitable for producing refrigerated products. In addition to the ice, organic solvents used as anti-freezing solutions such as ethanol can be used for producing such refrigerated products, but the ice has higher thermal conductivity and higher specific heat than these anti-freezing solutions. Therefore, ice with a lowered solidifying point by melting solutes such as the ice in the present invention is also useful in the point of having better refrigeration capacity than other refrigerants lower than 0°C such as anti-freezing solutions.

In the production method of the present invention, components other than the above-described ice may be used for refrigeration, for example, by using water in addition to the above-described ice, and refrigeration may be carried out by a mixture of ice and water. For example, if water containing the same solute as the solute contained in ice is further used for refrigeration, it is preferable that the solute concentration in ice and the solute concentration in water be close to each other. The reason is as follows.

In the case where the solute concentration of the ice is higher than the solute concentration of the water, the temperature of the ice is lower than the saturated freezing point of the water; accordingly, the water content freezes immediately after the water having a lower solute concentration is mixed. On the other hand, in the case where the solute concentration of the ice is lower than the solute concentration of the water, the saturated freezing point of the water is lower than the saturated freezing point of the ice; therefore, the ice melts and the temperature of the refrigerant made of the mixture of the ice and water decreases. In other words, not to change the state of the mixture of the ice and water (state of the ice slurry), as described above, it is preferable to set the solute concentrations of the ice and water to be mixed to be about the same. In addition, in the case of carrying out refrigeration in the state of mixture of the ice and water, the water may be generated by melting the ice, or by separately preparing, but it is preferable that the water be generated by melting the ice.

Specifically, the ratio of the solute concentration in the ice to the solute concentration in the water is more preferably from 75:25 to 20:80, still more preferably from 70:30 to 30:70, yet more preferably from 60:40 to 40:60, yet still more preferably from 55:45 to 45:55, particularly preferably from 52:48 to 48:52, and most preferably 50:50. In particular, in the case of using common salt as the solute, it is preferable that the ratio of the solute concentration in the ice to the solute concentration in the water be in the above range.

The ice slurry in the first embodiment uses known technologies as described above and contains nitrogen nanobubbles; accordingly, the ice slurry contains a low amount of dissolved oxygen and exerts even more excellent refrigeration properties. Furthermore, in producing the ice slurry related to the first embodiment, the liquid nitrogen used for producing the flake ice is reused for generating the nitrogen nanobubbles. Consequently, the liquid nitrogen is effectively utilized, and hypoxic ice slurry can be produced at a lower cost.

### <Example related to first embodiment>

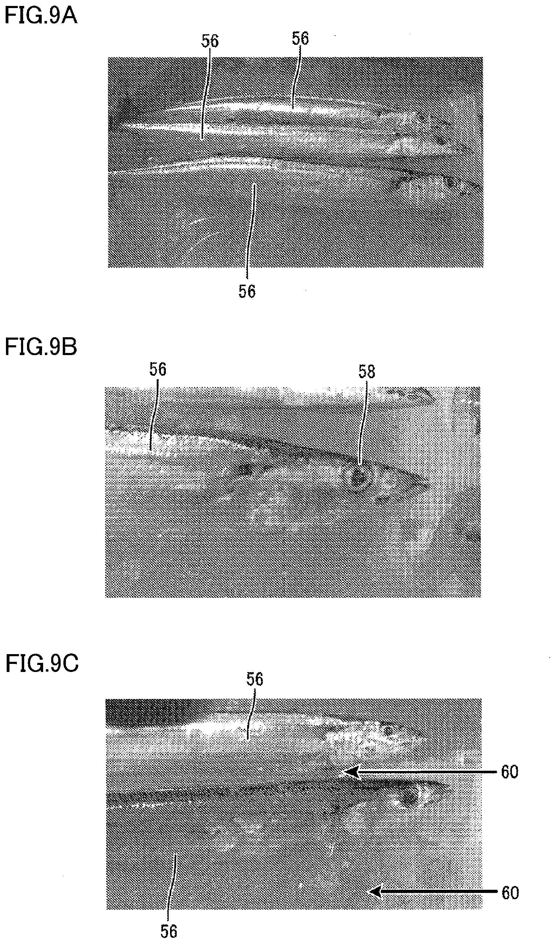

FIGS. 9A to 9C show the results of use of the ice slurry produced by use of the ice slurry production system10 and the ice slurry production device11 in the embodiment. In this Example, fresh fish (in this case, Pacific saury) was refrigerated using the ice slurry and preserved for four days. FIGS. 9A to 9C show pictures of the preserved Pacific saury in gray scale.

As shown in FIGS. 9A and 9B, no deterioration due to preservation was observed in the color and eye 58 of the fish body 56. The odor was the same as four days ago, and was not changed. In addition, blood 60 turns brown after one day under normal refrigeration, and the smell is different from that of fresh fish; however, by use of the ice slurry in the embodiment, the appearance was still the same as fresh blood, and there was no change in the smell. In this way, a great deterioration prevention effect was observed.

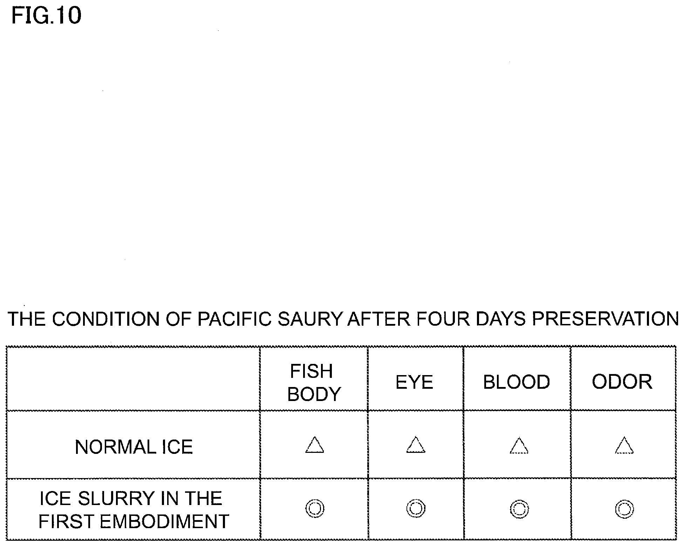

FIG. 10 is a table showing such experimental results. In contrast to the case where the Pacific saury was preserved using normal ice, in the case of using the ice slurry in the first embodiment, good results were obtained for any of fish body, eyes, blood, and smell.

### <Second embodiment>

Next, a second embodiment will be described. Similar to the ice or ice slurry disclosed in Patent Document 1, the ice slurry produced in the first embodiment can be applied not only to fresh fish, but also to other objects to be refrigerated. In the second embodiment, the ice slurry is used to transport human organs.

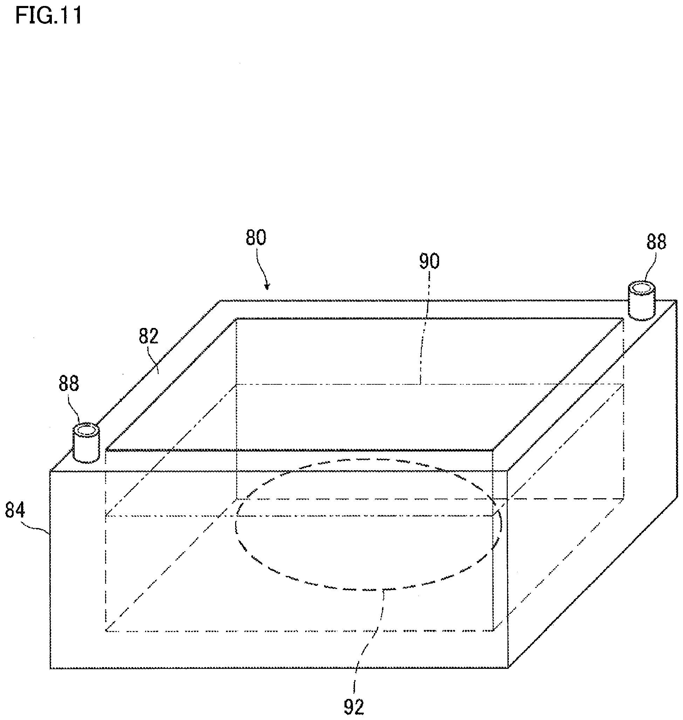

FIG. 11 schematically shows a refrigeration container 80 used to transport and preserve human organs. In the specific example in Figure 11, the refrigeration container 80 has a rectangular container body 82. The upper part of the container body 82 is open and can be closed with a lid, illustration of which is omitted. A seal structure (illustration is omitted) is formed between the container body 82 and the lid, and the seal structure prevents the entry of the outside air and the leakage of the inside cold air. For the lid, those rotate via a hinge portion (illustration is omitted) or those separable from the container body 82 can be provided as specific examples.

A hollow structure is adopted for a wall 84 of the container body 82, and the interior of the wall 84 is filled with container ice slurry (illustration is omitted). The reference sign 88 in FIG. 11 shows a container ice slurry tube. The container ice slurry tube 88 is used to inject the container ice slurry into the inner space of the container body 82 and to discharge the container ice slurry in the container body 82 to the outside. The container ice slurry tube 88 is also used to discharge the air in the wall 84, and to discharge an aqueous solution, which is the melted container ice slurry when the container ice slurry is injected.

The temperature of the container ice slurry is around -2°C to -3°C. Specific examples of the container ice slurry include: those produced from an aqueous solution containing 9.7% potassium nitrate (KNO₃) with a eutectic point of -2.8°C; those produced from an aqueous solution containing 5.9% sodium carbonate (Na₂CO₃) with a eutectic point of -2.1°C; and those produced from an aqueous solution containing 5% ethanol with a solidifying point of -2.1°C.

In the concave part inside the container body 82, refrigeration ice slurry 90 is stored as indicated by the chain double-dashed line. Similar to the ice slurry in the first embodiment, the refrigeration ice slurry 90 is produced from the brine of salt water, the salt concentration of which is adjusted so that the ice slurry becomes isotonic or substantially isotonic with the objects to be refrigerated. Furthermore, similar to the first embodiment, the refrigeration ice slurry 90 contains nitrogen nanobubbles, and has a dissolved oxygen content of 1.0 mg/L to 0.3 mg/L. More preferably, the amount of dissolved oxygen in the refrigeration ice slurry 90 is 0.6 mg/L to 0.3 mg/L, and still more preferably 0.4 mg/L to 0.3 mg/L.

The temperature of the refrigeration ice slurry 90 is about -1°C. The object to be refrigerated by the refrigeration ice slurry 90 is a human organ 92 for transplantation (for example, liver, which is schematically shown by an ellipse). As described in the first embodiment, a temperature zone of about -1°C does not freeze the organ 92 for transplantation and makes it possible to remain freshness for a long period of time. Furthermore, the refrigeration ice slurry 90 can maintain the freshness of the organ 92 for transplantation for a longer period of time because the amount of dissolved oxygen thereof is kept low.

Currently, organs 92 for transplantation, such as the liver, need to be transported within 12 hours of the donor's death. It is also undesirable for organs 92 for transplantation to come into contact with oxygen. Therefore, using the ice slurry similar to that of the first embodiment as the refrigeration ice slurry 90 to transport and preserve organs for transplantation by use of the refrigeration containers 80 is effective for the success of organ transplantation.

Each embodiment related to the present invention has been described above. Each embodiment is merely a specific example of embodying in implementation of the present invention, and the technical scope of the present invention should not be construed as being limited by each embodiment. That is, the present invention can be implemented in various forms without deviating from the gist or main features thereof.

### Reference Signs List

10: Ice slurry production system
11: Ice slurry production device
12: Storage tank
14: Disc part
16: Sweeping part
18: Liquid nitrogen tank
20: Nano-mixer
22: Motor
24: Rotary shaft
Ws: Brine

## Claims

1. Ice slurry used for refrigerating an object to be refrigerated, comprising:
a mixture of a saline solution containing at least nitrogen nanobubbles from among nitrogen microbubbles and nitrogen nanobubbles, and flake ice, which is the saline solution having frozen, the saline solution being isotonic or substantially isotonic with the object to be refrigerated,
the ice slurry having dissolved oxygen of 1.0 mg/L or less.

2. The ice slurry according to claim 1, wherein a temperature of the ice slurry is -1°C or lower.

3. An ice slurry production system comprising:
an ice slurry production tank storing a saline solution isotonic or substantially isotonic with an object to be refrigerated;
an ice production unit producing flake ice that is the saline solution having frozen, and mixing the flake ice into the saline solution;
a liquid nitrogen supply source supplying the ice production unit with liquid nitrogen; and
a nanobubble supply unit causing the saline solution to contain at least nitrogen nanobubbles from among nitrogen microbubbles and nitrogen nanobubbles using the liquid nitrogen having passed through the ice production unit.

4. An ice slurry production device comprising:
an ice production unit producing flake ice by freezing a saline solution, which is isotonic or substantially isotonic with an object to be refrigerated and contains at least nitrogen nanobubbles from among nitrogen microbubbles and nitrogen nanobubbles, and mixing the flake ice into the saline solution.

5. The ice slurry production device according to claim 4, wherein the ice production unit cools the saline solution using cold energy of liquid nitrogen,
the ice slurry production device comprising a nanobubble supply unit causing the saline solution to contain at least nitrogen nanobubbles from among nitrogen microbubbles and nitrogen nanobubbles using the liquid nitrogen having passed through the ice production unit.

6. An ice slurry production method comprising:
a first step of supplying a saline solution with at least nitrogen nanobubbles from among nitrogen microbubbles and nitrogen nanobubbles, the saline solution being isotonic or substantially isotonic with an object to be refrigerated; and
a second step of mixing flake ice, which is the saline solution having frozen, into the saline solution to produce ice slurry having dissolved oxygen of 1.0 mg/L or less.

7. An ice slurry production method comprising:
a first step of supplying an ice production unit with liquid nitrogen to cool the ice production unit;
a second step of producing flake ice by freezing a saline solution isotonic or substantially isotonic with an object to be refrigerated, and mixing the flake ice into the saline solution, the second step being performed by the ice production unit; and
a third step of supplying the saline solution with at least nitrogen nanobubbles from among nitrogen microbubbles and nitrogen nanobubbles using the liquid nitrogen having passed through the ice production unit.
